# EUROPEAN PATENT SPECIFICATION

(11) **EP 0 364 213 B1**
(45) Date of publication and mention of the grant of the patent: **28.12.1994**
(21) Application number: 89310352.3
(22) Date of filing: 10.10.1989
(51) Int. Cl.: G11B 7/00, G11B 7/09, G11B 7/095

(54) **Method and apparatus for driving light source by stored current value and for processing information**
Verfahren und Vorrichtung zum Betreiben der Lichtquelle durch einen gespeicherten Stromwert und zur Erzeugung von Information
Procédé et dispositif pour entraîner la source de lumière par une valeur de courant mémorisée et pour fournir des informations

(30) Priority: 11.10.1988 JP 256318/88
(43) Date of publication of application: 18.04.1990
(73) Proprietor: CANON KABUSHIKI KAISHA, Tokyo (JP)
(72) Inventor: Aoi, Shigeru, Kawasaki-shi Kanagawa-ken (JP)
(74) Representative: Beresford, Keith Denis Lewis

(56) References cited:
- US-A- 4 747 091
- PATENT ABSTRACTS OF JAPAN, unexamined applications, P field, vol. 10, no. 341,November 18, 1986 THE PATENT OFFICE JAPANESE GOVERNMENT page 36 P 517
- PATENT ABSTRACTS OF JAPAN, unexamined applications, P field, vol. 11, no. 100,
- March 28, 1987 THE PATENT OFFICE JAPANESE GOVERNMENT page 134 P 561

## Description

The present invention relates to an information processing method and an apparatus in which a light beam emitted from a light source is converged and irradiated onto an optical recording medium, thereby executing at least any one of the information recording reproducing, and erasing operations.

Hitherto, as large capacity memories which are used in computers or the like, an optical card apparatus which can record and reproduce information, an optical disk apparatus, a magneto optical disk apparatus which can record, reproduce, and erase information, and the like have been known. In the above apparatuses, recording and the like are also executed by irradiating a light beam emitted from a light source onto an optical recording medium. At this time, an output power of a semiconductor laser or the like,which is used as the light source, fluctuates in association with environmental changes in temperature and the like even when a predetermined current is input. Therefore, in an apparatus disclosed in, for instance, US-A-4,509,156 what is called an automatic power control (APC) is executed which the output power of a light source is detected upon reproduction and the result of the detection is fed back to the light source to thereby keep the output power constant. On the other hand, in such an apparatus, upon recording, an input current value by the APC in the reproducing mode is held, the current of the amount corresponding to an increase in power which is necessary to record is added to the current held, and the resultant added current is supplied to the light source.

However, in the above APC, a certain extent of time period is necessary until the output power of the light source becomes stable. Therefore, in the case where the output power of the light source must be switched at a high speed, for instance, the powers of the light beam which are necessary to record or the like in an inner track portion and an outer track portion of, for instance, an optical disk differ and, further, in the case where random access of the light beam is executed in the region between those portions, the APC cannot cope adequately with such a case.

A partial solution to the problem just mentioned is taught in US-A-4,747,091. A drive current value obtained at the start of the apparatus is stored in memory. Thereafter the APC circuit starts from an initial operational value corresponding to that value stored in memory. Each time APC operation is completed the current value in memory is up-dated by the most recent APC current value, if different from that previously stored. Since APC operation starts thus from a finite and not a zero initial operational current value, time is saved and faster access is achieved.

In operation the position of data which is accessed sequentially can differ significantly and there can be a difference between the power demanded and the last value stored during APC operation. Also the foregoing assumes that the relationship between light power and driving current is fixed. This relationship however is effected by reflection of light from the optical recording medium. It also is effected by the temperature of the light source. Errors can thus arise and delay is still introduced because initial APC power and demand power can differ appreciably.

The method and apparatus of this invention are intended by way of a further improvement.

According to a first aspect of this invention there is provided an optical information processing method including:
a first step of supplying a driving current to a light source to emit a light beam;
a second step of converging the light beam emitted from the light source and irradiating the converged light beam onto an optical recording medium;
a third step of adjusting a focal point of the light beam on the recording medium;
a fourth step of adjusting the driving current so as to set the power of the light beam to a predetermined value;
a fifth step of storing a value of the driving current adjusted in the fourth step; and
a sixth step of supplying a driving current, having a value determined by reference to a value stored in said fifth step, to the light source to emit a light beam and scanning the recording medium with the light beam emitted from the light source to thereby effect recording of information, reproduction of information or erasure of information,
characterised in that:
said fourth and fifth steps are repeated for a range of different predetermined values of power, which range accounts for changes in both temperature of the optical medium and relative speed between the optical recording medium and the light beam; and
in said sixth step, a required current value is selected from amongst the plurality of stored current values, or otherwise is linearly approximated therefrom, to correspond to a demanded power level, and a current having the required current value is supplied to the light source as the initial operational driving current therefor.

Optionally and advantageously, the current value data, stored in memory, can be updated each time it is detected that the temperature of the light source has changed by a predetermined value or more.

According to a second aspect of this invention there is provided an optical information processing apparatus including:
a light source for emitting a light beam; focusing means, including a servo circuit, for focusing said light beams on an optical recording medium;
a detector for detecting the power of said light beam emitted from said light source;
a driving circuit, including an automatic power control circuit, responsive to said detector, to adjust current supplied to said light source so that said power is set to, and is maintained at, a demanded power level;
a memory for storing a value of driving current supplied to said light source; and
an apparatus control circuit arranged to control operation of said focusing means, and said driving circuit;
in which apparatus, for performing a recording, reproducing, or erasure operation, said automatic power control circuit is operable from an initial operational current value determined with reference to said memory;
wherein said apparatus is characterised in that:
said apparatus control circuit is operable, prior to a recording, reproducing, or erasure operation, to cause said driving circuit to adjust current supplied to said light source so that said power is set to and is maintained at each one of a set of different demanded power levels, which set of demanded power levels span a range taking account of changes in both the temperature of the optical recording medium and the relative speed between the optical recording medium and light beam;
said apparatus further including:
entry means for entering into said memory each value of adjusted current corresponding to each one of said set of different demanded power levels; and
processing means, co-operative with said memory, for determining, for each recording, reproducing or erasing operation, the value of initial operational current by selection of, or linear approximation based on, data stored in said memory, which is to correspond to a power level demanded for recording, reproducing or erasing operation.

In the drawings accompanying this specification
Fig. 1 is a block diagram showing a construction of an embodiment of an optical information processing apparatus of the invention;
Fig. 2 is a diagram for explaining a state of adjustment of a laser light quantity in the apparatus shown in Fig. 1; and
Figs. 3 and 4 are flowcharts showing the operating steps of the apparatus shown in Fig. 1, respectively.

A preferred embodiment of the invention will be described below. The following description is given by way of example only.

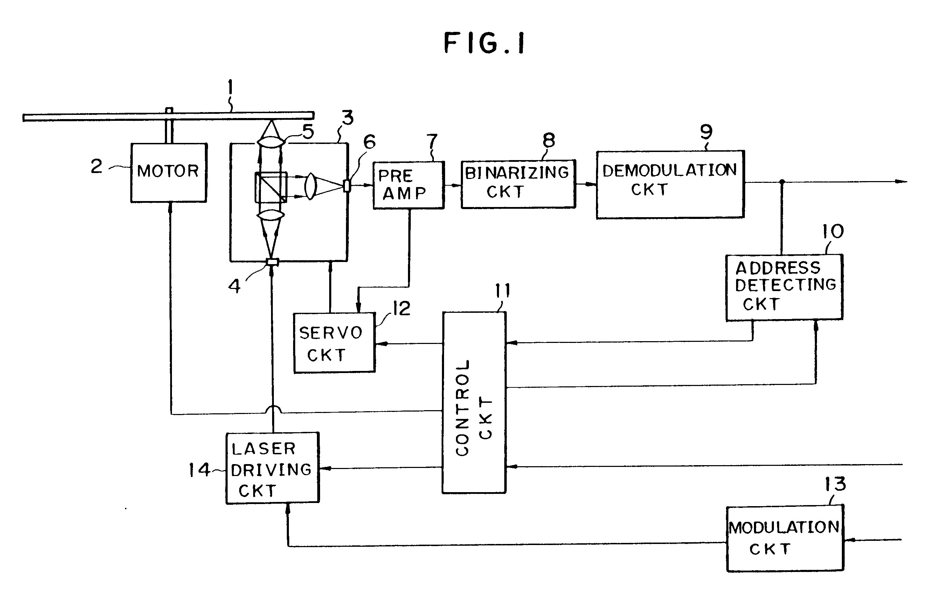

In Fig. 1, reference numeral 1 denotes a disk of an optical information recording medium. The disk 1 is rotated by a motor 2. The light emitted from a semiconductor laser 4 is focused onto the disk 1 by an objective lens 5. The light reflected by the disk 1 again passes through the objective lens 5 and is photoelectrically converted by a sensor 6 and amplified by a preamplifier 7. The signal is then separated into a focusing error signal, a tracking error signal, and a reproduction information signal by the preamplifier 7. The reproduction information signal is digitized by a binarizing circuit 8 and demodulated to the data signal by a demodulation circuit 9 and is transmitted to a host apparatus. The recording data signal from the host apparatus is input to a modulation circuit 13 and transferred to a laser driving circuit 14 and drives the laser 4. The tracking error signal and the focusing error signal which were output from the preamplifier 7 are input to a servo circuit 12. A focusing error and a tracking error of an optical head 3 are controlled on the basis of the tracking error signal and focusing error signal. Reference numeral 11 denotes a control circuit of the information recording and reproducing apparatus. The control circuit 11 controls the apparatus on the basis of commands from the host apparatus. An address detecting circuit 10 detects an address of the beam position on the disk from an output of the demodulation circuit 9.

The laser driving circuit 14 supplies a driving current to the semiconductor laser 4. As disclosed in US-A-4,375,067, the laser driving circuit 14 has a photodetector for receiving the light which is emitted from the back side of the semiconductor laser 4 and detecting an output power of the laser 4. An output of the photodetector is used to control the power of the laser beam which is emitted from the semiconductor laser to a constant value. That is, the laser driving circuit 14 includes an APC circuit.

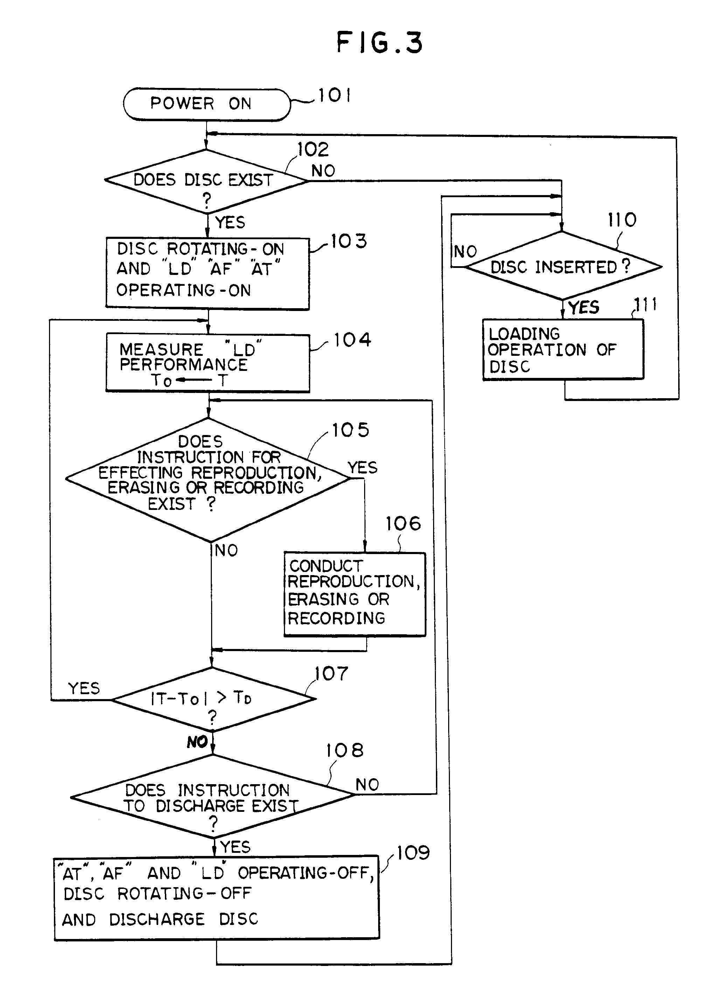

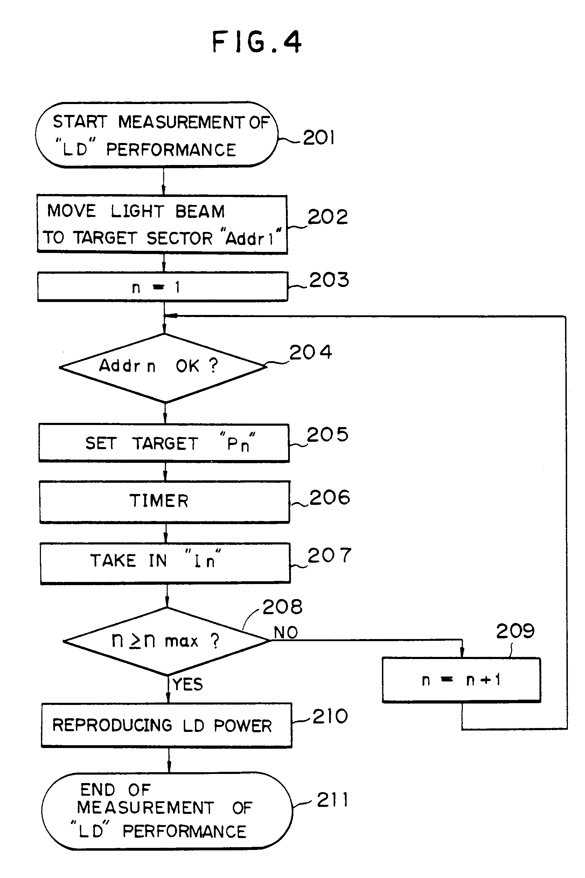

The operation of the apparatus shown in Fig. 1 will be described with reference to the flowchart of Fig. 3. When a power source of the apparatus is turned on, although not shown, a check is made to see if a disk has been inserted in the apparatus or not (step 102). If no disk is inserted, discrimination is executed continuously (step 110) to see if the disk has been inserted or not. After insertion of the disk is detected, the disk is loaded (step 111). If the disk has been inserted (step 102), the control circuit 11 rotates the disk by the motor 2. If a rotational speed of the disk has reached a stationary value, the control circuit 11 generates a command to the laser driving circuit 14, thereby driving the laser with a reproduction light quantity and executing the focusing control and tracking control by the servo circuit 12 (step 103). Thereafter, the laser performance,which will be explained later in Fig. 4, is measured. A temperature of the laser at this time is measured by a thermometer (not shown) and the measured value is set to T₀ (step 104). After completion of the measurement of the laser performance, a check is made to see if the reproducing, recording, or erasing operation has been instructed or not (step 105). Each operation is executed on the basis of its command (step 106). The laser temperature is again measured and a check is made by the control circuit 11 to see if the laser temperature at this time has changed or not by a predetermined temperature T_{D} (in this case, 5°C) from the temperature when the preceding laser performance was measured or more (step 107). If the temperature has changed by T_{D} or more, the laser performance is again measured. If the temperature does not change, the control circuit 11 discriminates whether ejection of the disk has been instructed or not (step 108). If NO, a check is again made to see if a reproducing, recording, or erasing operation has been instructed or not. If disk ejection has been instructed, the control circuit 11 stops the tracking and focusing controls by the servo circuit 12 and outputs a command to the laser driving circuit 14 so as to stop the driving of the laser. The rotation of the disk is stopped and the disk is ejected (step 109). Thereafter, a check is made again to see if a disk has been loaded or not (step 110).

The laser performance is measured in a state in which the focusing and tracking controls are being executed in a predetermined area of the disk and in a data recordable or reproducible portion in which information such as address data or the like is not recorded. This is because a return light quantity to the laser is set to the same condition as that in the case of actually recording or erasing data. When the return light quantity to the laser changes, the light emitting efficiency of the laser changes and the laser performance cannot always be measured accurately.

On the other hand, data is not actually recorded in such an area and the data recording is executed while always confirming addresses by a host computer or a controller.

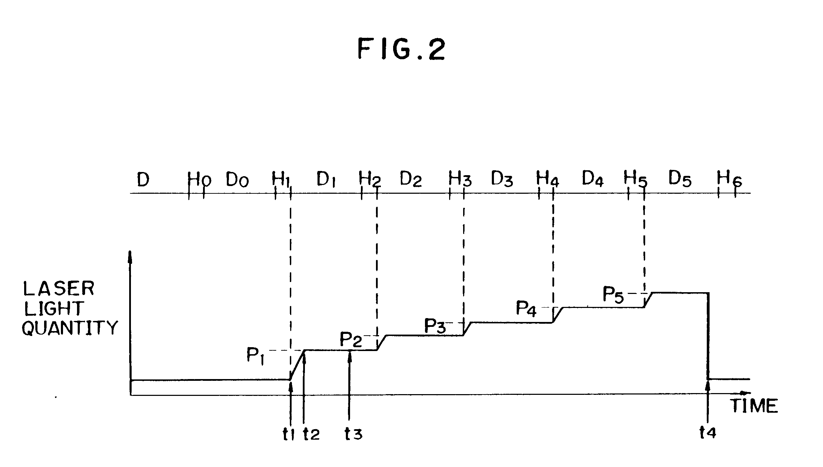

Measurement of the laser performance will now be described with reference to the flowchart of Fig. 4 and Figs. 1 and 2. When the measurement is started (step 201), the control circuit 11 first sets a head address Addrl of a predetermined measuring area to the address detecting circuit 10 and drives the optical head 3 by the servo circuit 12, thereby moving the light beam to the target address Addrl (step 202). Next, n of a measurement step calculating register is set to 1 (step 203). There is a delay until the address is set to Addrl. During signal reproduction of header portion H₁, if the address is set to Addrl, an address coincidence signal is output from the address detecting circuit 10 and if the address coincidence signal has been detected (step 204), at time t₁ in Fig. 2, a control target power of the laser beam of the control circuit is set to a light output of P₁ (step 205). The laser driving circuit 14 monitors the power of the laser beam and controls the driving current so as to obtain a predetermined power. The laser driving circuit 14 responds and the light power is set to P₁ at time t₂. At this time, a timer of a time larger than t₁ - t₂ is made operative (step 206). The driving current is stored into a memory (not shown) provided in the control circuit 11 at time t₃ after the light power has stabilized sufficiently and before the address area is set to the address area of the next sector (step 207). Such a portion exists in a data area of D₁. Thereafter, the value of n is increased one by one (step 209). In this example, nₘₐₓ is set to 5 and the target light power is set to five stages and the driving current of the semiconductor laser, for each power being output is stored into the memory.

Finally, the output of the semiconductor laser is returned to the reproducing power level (step 210). The measurement of the laser performance is finished (step 211).

The range of the light output for the above five stages is set so as to satisfy a range of light output necessary to encompass changes of temperature of the disk and relative speed between the medium and the spot at the recording position A target value to be set is sequentially changed from a low light power to a high light power. When the value of Iₙ has reached the maximum value at which the driving circuit can drive, this means that the life of the laser has approached the end, so that there is a possibility such that the necessary light power is not obtained. Therefore, when Iₙ has reached this limit value, the control circuit 11 indicates a laser error or informs an upper apparatus of such laser error) thereby warning the user to exchange the laser.

The driving currents corresponding to the target light powers of P₁ to P₅ are obtained as mentioned above. The target light output is derived by supplying the driving current corresponding to the necessary erasing or recording power to the semiconductor laser on the basis of the value derived from the measurement point. If a light power between the measurement points is demanded, the relation between the current and the power is linearly approximated on the basis of the result of the measurement, thereby calculating the driving current corresponding to the demanded power.

In the invention, a measured value can be also used as an initial current when executing the APC operation upon recording or erasing. In such a case, the current of the value stored in the memory is first supplied to the semiconductor laser and the APC operation is executed at a stage when the light emission of the laser is stabilized.

In the embodiment, the laser performance has been measured in a DC light-up mode. However, the laser light quantity upon recording is based on the pulse light-up operation and there is a case where a light peak quantity larger than the light quantity upon erasing is necessary. When measuring such a driving current, it is sufficient to measure by pulse lighting up the semiconductor laser. In the case of a laser such that the maximum rated laser outputs in the DC light-up mode and the pulse light-up mode differ, the maximum rated output in the pulse light-up mode is larger than that in the DC light-up mode. Therefore, in the pulse light-up mode, the laser performance can be measured in a range wider than that in the case of the measurement which is executed in the DC light-up mode.

In the case of measuring in the pulse light-up mode, if the frequency of the circuit to monitor the emission light power of the APC loop is lower than the pulse frequency, it is sufficient that the light power corresponding to a predetermined duty ratio of the pulse light-up operation is calculated and the driving current corresponding to the calculated power is measured.

When measuring in the pulse light-up mode, if the header portion is reproduced and the address is checked, it is necessary to set the DC light-up mode. It is desirable to set the light quantity at this time to a low power upon reproduction. Even when measuring in the DC light-up mode, the light quantity can be also set to the light power upon reproduction for a time interval when the light beam is irradiated to the header portion.

In addition to the above-described embodiment, various modifications of the invention are possible. For instance, the power of the light beam can also be detected by receiving a part of the light beam directed from the light source to the medium by the photodetector.

## Claims

1. An optical information processing method including:
a first step of supplying a driving current to a light source (4) to emit a light beam;
a second step of converging the light beam emitted from the light source (4) and irradiating the converged light beam onto an optical recording medium (1);
a third step of adjusting a focal point of the light beam on the recording medium;
a fourth step of adjusting the driving current so as to set the power of the light beam to a predetermined value;
a fifth step of storing a value of the driving current adjusted in the fourth step; and
a sixth step of supplying a driving current, having a value determined by reference to a value stored in said fifth step, to the light source (4) to emit a light beam and scanning the recording medium with the light beam emitted from the light source to thereby effect recording of information, reproduction of information or erasure of information,
characterised in that:
said fourth and fifth steps are repeated for a range of different predetermined values of power, which range accounts for changes in both temperature of the optical medium (1) and relative speed between the optical recording medium and the light beam; and
in said sixth step, a required current value is selected from amongst the plurality of stored current values, or otherwise is linearly approximated therefrom, to correspond to a demanded power level, and a current having the required current value is supplied to the light source as the initial operational driving current therefor.

2. A method according to claim 1, wherein said fourth and fifth steps are executed in a state in which the medium and the light beam are moving relatively.

3. A method according to claim 2, wherein said fourth and fifth steps are executed in a state in which a tracking control of the light beam is executed.

4. A method according to claim 1, wherein in said second step, the light beam is irradiated onto a predetermined area on the medium where no information is recorded.

5. A method according to claim 1, wherein said light source is a pulsed light up source.

6. A method according to claim 1, wherein said first to fifth steps are executed following turn on of power.

7. A method according to claim 1, wherein said first to fifth steps are executed whenever the optical recording medium is exchanged.

8. A method according to claim 1, further comprising a step of measuring a temperature of the light source, and wherein said first to fifth steps are executed, the fourth and fifth steps repeatedly as aforesaid, each time it is detected that the temperature of the light source has changed by a predetermined value or more.

9. A method according to claim 1, further comprising a step of comparing each value of the driving current which is adjusted in said fourth step with a predetermined limit value and generating a warning when the current value has reached said limit value.

10. A method according to claim 1, wherein said light source is a semiconductor laser.

11. An optical information processing apparatus including:
a light source (4) for emitting a light beam; focusing means (3,12), including a servo circuit (12), for focusing said light beams on an optical recording medium (1);
a detector for detecting the power of said light beam emitted from said light source (4);
a driving circuit (14), including an automatic power control circuit, responsive to said detector, to adjust current supplied to said light source so that said power is set to, and is maintained at, a demanded power level;
a memory for storing a value of driving current supplied to said light source (4); and
an apparatus control circuit (11) arranged to control operation of said focusing means (3,12), and said driving circuit 14;
in which apparatus, for performing a recording, reproducing, or erasure operation, said automatic power control circuit is operable from an initial operational current value determined with reference to said memory;
wherein said apparatus is characterised in that:
said apparatus control circuit (11) is operable, prior to a recording, reproducing, or erasure operation, to cause said driving circuit (14) to adjust current supplied to said light source (4) so that said power is set to and is maintained at each one of a set of different demanded power levels, which set of demanded power levels span a range taking account of changes in both the temperature of the optical recording medium and the relative speed between the optical recording medium and light beam;
said apparatus further including:
entry means for entering into said memory each value of adjusted current corresponding to each one of said set of different demanded power levels; and
processing means, co-operative with said memory, for determining, for each recording, reproducing or erasing operation, the value of initial operational current by selection of, or linear approximation based on, data stored in said memory, which is to correspond to a power level demanded for recording, reproducing or erasing operation.

12. An apparatus according to claim 11, further comprising means for executing tracking control.

13. An apparatus according to claim 11, further comprising means for comparing each current value which is input to the memory with a predetermined limit value and for generating a warning when the limit value is reached or exceeded.

14. An apparatus according to claim 11, further comprising:
means for measuring the temperature of the light source; and
means for updating current values stored in the memory when the temperature of the light source has changed by a predetermined value or more.

15. An apparatus according to claim 11, wherein said light source is a semiconductor laser.

## Patentansprüche

1. Optisches Informationsverarbeitungsverfahren, mit:
einem ersten Verfahrensschritt, bei dem ein Ansteuerstrom an eine Lichtquelle (4) geliefert wird, um einen Lichtstrahl zu emittieren;
einem zweiten Verfahrensschritt, in dem der von der Lichtquelle (4) emittierte Lichtstrahl konvergiert wird und der konvergierte Lichtstrahl einen optischen Aufzeichnungsträger (1) anstrahlt;
einem dritten Verfahrensschritt, in dem ein Brennpunkt des Lichtstrahls auf den Aufzeichnungsträger eingestellt wird;
einem vierten Verfahrensschritt, in dem der Ansteuerstrom eingestellt wird, um die Leistung des Lichtstrahls auf einen vorbestimmten Wert zu setzen;
einem fünften Verfahrensschritt, in dem ein Wert des im vierten Verfahrensschritt eingestellten Ansteuerstroms gespeichert wird; und mit
einem sechsten Verfahrensschritt, in dem die Lichtquelle (4) mit einem Ansteuerstrom beliefert wird, der durch Vergleich mit dem im fünften Verfahrensschritt gespeicherten Wert bestimmt wird, um einen Lichtstrahl zu emittieren und den Aufzeichnungsträger mit dem aus der Lichtquelle emittierten Lichtstrahl abzutasten, um dadurch die Informationsaufnahme, die Informationswiedergabe und die Informationslöschung zu bewirken,
**dadurch gekennzeichnet,**
daß der vierte und der fünfte Verfahrensschritt in einem für Änderungen sowohl der Temperatur des optischen Trägers (1) als auch der relativen Geschwindigkeit zwischen dem optischen Aufzeichnungsträger und den Lichtstrahl verantwortlichen Bereich verschiedener vorbestimmter Leistungswerte wiederholt wird; und
daß in dem sechsten Verfahrensschritt aus der Vielzahl der gespeicherten Stromwerte ein benötigter Stromwert ausgewählt wird oder andererenfalls aus diesen linear angenähert wird, um dem geforderten Leistungspegel zu entsprechen, wobei ein Strom mit dem benötigten Stromwert als deren anfänglicher Betriebsansteuerstrom an die Lichtquelle geliefert wird.

2. Verfahren nach Anspruch 1, dessen vierter und fünfter Verfahrensschritt in einem Zustand ausgeführt wird, bei dem der Träger und der Lichtstrahl eine Relativbewegung ausführen.

3. Verfahren nach Anspruch 2, dessen vierter und fünfter Verfahrensschritt in einem Zustand ausgeführt werden, in dem eine Spurfolgesteuerung des Lichtstrahls ausgeführt wird.

4. Verfahren nach Anspruch 1, in dessen zweitem Verfahrensschritt der Lichtstrahl auf einen vorbestimmten Bereich auf den Träger gerichtet wird, auf dem keine Information aufgezeichnet ist.

5. Verfahren nach Anspruch 1, in dem die Lichtquelle eine Impulslichtquelle ist.

6. Verfahren nach Anspruch 1, in dem der erste bis fünfte Verfahrensschritt in Reihenfolge der Leistung ausgeführt wird.

7. Verfahren nach Anspruch 1, in dem der erste bis fünfte Verfahrensschritt immer dann ausgeführt wird, wenn der optische Aufzeichnungsträger ausgewechselt wird.

8. Verfahren nach Anspruch 1, das des weiteren den Verfahrensschritt der Temperaturmessung der Lichtquelle umfaßt, und in dem der erste bis fünfte Verfahrensschritt ausgeführt wird, wobei der vierte und fünfte Verfahrensschritt in der zuvor genannten Weise wiederholt ausgeführt wird, wobei jedesmal festgestellt wird, daß sich die Temperatur der Lichtquelle um einen vorgegebenen Wert oder mehr geändert hat.

9. Verfahren nach Anspruch 1, das des weiteren den Verfahrensschritt des Vergleichens eines jeden Wertes des Ansteuerstroms umfaßt, der in dem vierten Verfahrensschritt mit einem vorbestimmten Grenzwert eingestellt wird, und in dem eine Warnung erzeugt wird, wenn der Stromwert den Grenzwert erreicht hat.

10. Verfahren nach Anspruch 1, in dem die Lichtquelle ein Halbleiterlaser ist.

11. Optisches Informationsverarbeitungsgerät, mit:
einer Lichtquelle (4), die einen Lichtstrahl emittiert;
Fokussiermitteln (3, 12), die eine Servoschaltung (12) zur Fokussierung der Lichtstrahlen auf einen optischen Aufzeichnungsträger (1) enthalten;
einem die Leistung des von der Lichtquelle (4) emittierten Lichtes feststellenden Detektor;
einer Ansteuerschaltung (14), die eine automatische, auf den Detektor ansprechende Leistungssteuerschaltung enthält, um den an die Lichtquelle gelieferten Strom abzugleichen, so daß die Leistung auf den erforderlichen Leistungspegel eingestellt und beibehalten wird;
einem den Wert des an die Lichtquelle (4) gelieferten Ansteuerstroms Speichernden Speicher; und mit
einer zum Steuerbetrieb der Fokussiermittel (3, 12) und der Ansteuerschaltung (14) eingerichteten Gerätesteuerschaltung (11);
wobei in dem Gerät die automatische Leistungssteuerschaltung von einem anfänglichen Betriebsstromwert, der durch Bezug auf den Speicher bestimmt wird, zum Ausführen des Aufnahme-, Wiedergabe- oder des Löschbetriebs betriebsbereit ist;
**dadurch gekennzeichnet,** daß
die Gerätesteuerschaltung (11) vor einem Aufnahme-, Wiedergabe- oder Löschbetrieb betriebsbereit ist, die Ansteuerschaltung (14) zum Abgleich des an die Lichtquelle (4) gelieferten Stroms zu veranlassen, so daß die Leistung bei jedem einzelnen eines Satzes von verschiedenen erforderlichen Leistungspegeln eingestellt und beibehalten wird, wobei der Satz erforderlicher Leistungspegel einen Bereich überdeckt, der den Änderungen sowohl der Temperatur des optischen Aufzeichnungsträgers als auch der relativen Geschwindigkeit zwischen dem optischen Aufzeichnungsträger und dem Lichtstrahl Rechnung trägt;
daß das Gerät des weiteren ausgestattet ist mit:
Eingabemitteln zur Eingabe eines jeden Wertes des abgeglichen Stroms entsprechend einem jeden Satz verschiedener erforderlicher Leistungspegel; und
mit dem Speicher zusammenarbeiten Verarbeitungsmitteln, die den Wert des Anfangsbetriebsstromes für jede Aufnahme -, Wiedergabe - oder Löschoperation durch Auswahl von oder linearer Annäherung auf der Grundlage von in dem Speicher gespeicherten Daten bestimmen, die dem erforderlichen Leistungspegel zum Aufnahme- , Wiedergabe- oder Löschbetrieb entsprechen.

12. Gerät nach Anspruch 11, das des weiteren Mittel zur Spurfolgesteuerung enthält.

13. Gerät nach Anspruch 11, das des weiteren Mittel zum Vergleich eines jeden Stromwertes enthält, der in den Speicher mit einem vorgegebenen Grenzwert eingegeben wird, und zur Erzeugung einer Warnung, wenn der Grenzwert erreicht oder überschritten ist.

14. Gerät nach Anspruch 11, das des weiteren ausgestattet ist mit:
Mitteln zur Temperaturmessung der Lichtquelle; und mit
Mitteln zur Aktualisierung der in dem Speicher gespeicherten Stromwerte, wenn die Temperatur der Lichtquelle sich um einen vorbestimmten Wert oder mehr ändert.

15. Vorrichtung nach Anspruch 11, deren Lichtquelle ein Halbleiterlaser ist.

## Revendications

1. Un procédé de traitement d'information optique comprenant :
une première étape consistant à appliquer un courant d'attaque à une source de lumière (4) pour qu'elle émette un faisceau de lumière;
une seconde étape consistant à faire converger le faisceau de lumière qui est émis par la source de lumière (4) et à projeter sur un support d'enregistrement optique (1) le faisceau de lumière qui a convergé;
une troisième étape consistant à régler un foyer du faisceau de lumière sur le support d'enregistrement;
une quatrième étape consistant à régler le courant d'attaque de façon à fixer la puissance du faisceau de lumière à une valeur prédéterminée;
une cinquième étape consistant à enregistrer une valeur du courant d'attaque réglé à la quatrième étape; et
une sixième étape consistant à appliquer à la source de lumière (4) un courant d'attaque ayant une valeur qui est déterminée par référence à une valeur enregistrée à la cinquième étape, pour que la source émette un faisceau de lumière et pour balayer le support d'enregistrement avec le faisceau de lumière qui est émis par la source de lumière, pour effectuer ainsi des opérations d'enregistrement d'information, de reproduction d'information ou d'effacement d'information,
caractérisé en ce que :
les quatrième et cinquième étapes sont répétées sur une plage de valeurs de puissance prédéterminées différentes, cette plage tenant compte de changements aussi bien de la température du support d'enregistrement optique (1) que de la vitesse relative entre le support d'enregistrement optique et le faisceau de lumière; et
dans la sixième étape, une valeur de courant exigée est sélectionnée parmi l'ensemble de valeurs de courant enregistrées, ou bien est obtenue par approximation linéaire à partir de ces valeurs, de façon à correspondre à un niveau de puissance exigé, et un courant ayant la valeur de courant exigée est appliqué à la source de lumière à titre de courant d'attaque de fonctionnement initial pour cette dernière.

2. Un procédé selon la revendication 1, dans lequel les quatrième et cinquième étapes sont accomplies dans un état dans lequel le support d'enregistrement et le faisceau de lumière sont en mouvement relatif.

3. Un procédé selon la revendication 2, dans lequel les quatrième et cinquième étapes sont accomplies dans un état dans lequel une commande de suivi de piste du faisceau de lumière est effectuée.

4. Un procédé selon la revendication 1, dans lequel à la seconde étape, le faisceau de lumière est projeté sur une région prédéterminée sur le support d'enregistrement dans laquelle aucune information n'est enregistrée.

5. Un procédé selon la revendication 1, dans lequel la source de lumière est une source d'éclairement fonctionnant en régime d'impulsions.

6. Un procédé selon la revendication 1, dans lequel les première à cinquième étapes sont accomplies à la suite de la mise sous tension.

7. Un procédé selon la revendication 1, dans lequel les première à cinquième étapes sont accomplies chaque fois que le support d'enregistrement optique est échangé.

8. Un procédé selon la revendication 1, comprenant en outre une étape consistant à mesurer une température de la source de lumière, et dans lequel les première à cinquième étapes sont accomplies, et les quatrième et cinquième étapes sont accomplies de façon répétée, comme indiqué ci-dessus, chaque fois que l'on détecte que la température de la source de lumière a changé d'une valeur prédéterminée ou plus.

9. Un procédé selon la revendication 1, comprenant en outre une étape consistant à comparer chaque valeur du courant d'attaque qui est réglé à la quatrième étape avec une valeur limite prédéterminée, et à produire un avertissement lorsque la valeur de courant a atteint cette valeur limite.

10. Un procédé selon la revendication 1, dans lequel la source de lumière est un laser à semiconducteurs.

11. Un appareil de traitement d'information optique comprenant :
une source de lumière (4) pour émettre un faisceau de lumière;
des moyens de focalisation (3, 12), comprenant un circuit d'asservissement (12), pour focaliser le faisceau de lumière sur un support d'enregistrement optique (1);
un détecteur pour détecter la puissance du faisceau de lumière qui est émis par la source de lumière (4);
un circuit d'attaque (14), comprenant un circuit de commande automatique de puissance, fonctionnant sous la dépendance du détecteur, de façon à régler le courant qui est appliqué à la source de lumière d'une manière telle que la puissance soit fixée à un niveau de puissance exigé et soit maintenue à ce niveau;
une mémoire pour enregistrer une valeur du courant d'attaque qui est appliqué à la source de lumière (4); et
un circuit de commande d'appareil (11) conçu pour commander le fonctionnement des moyens de focalisation (3, 12) et du circuit d'attaque (14);
dans lequel, pour effectuer une opération d'enregistrement, de reproduction ou d'effacement, le circuit de commande automatique de puissance peut fonctionner à partir d'une valeur de courant de fonctionnement initiale qui est déterminée par référence à la mémoire;
cet appareil étant caractérisé en ce que :
le circuit de commande d'appareil (11) peut fonctionner, avant une opération d'enregistrement, de reproduction ou d'effacement, pour faire en sorte que le circuit d'attaque (14) règle le courant appliqué à la source de lumière (4) d'une manière telle que la puissance soit fixée et soit maintenue à chaque niveau parmi un ensemble de niveaux de puissance exigés différents, cet ensemble de niveaux de puissance exigés couvrant une plage qui tient compte de changements à la fois de la température du support d'enregistrement optique et de la vitesse relative entre le support d'enregistrement optique et le faisceau de lumière;
cet appareil comprenant en outre :
des moyens d'entrée pour introduire dans la mémoire chaque valeur de courant réglé correspondant à chaque niveau de l'ensemble de niveaux de puissance exigés différents; et
des moyens de traitement, coopérant avec la mémoire, de façon à déterminer, pour chaque opération d'enregistrement, de reproduction ou d'effacement, la valeur de courant de fonctionnement initial par la sélection de données enregistrées dans la mémoire, ou par une approximation linéaire basée sur ces données, correspondant à un niveau de puissance exigé pour l'opération d'enregistrement, de reproduction ou d'effacement.

12. Un appareil selon la revendication 11, comprenant en outre des moyens pour effectuer une commande de suivi de piste.

13. Un appareil selon la revendication 11, comprenant en outre des moyens pour comparer chaque valeur de courant qui est appliquée à la mémoire avec une valeur limite prédéterminée, et pour produire un avertissement lorsque la valeur limite est atteinte ou dépassée.

14. Un appareil selon la revendication 11, comprenant en outre :
des moyens pour mesurer la température de la source de lumière; et
des moyens pour actualiser des valeurs de courant enregistrées dans la mémoire lorsque la température de la source de lumière a changé d'une valeur prédéterminée ou plus.

15. Un appareil selon la revendication 11, dans lequel la source de lumière est un laser à semiconducteurs.
